(19) Europäisches Patentamt
European Patent Office
Office européen des brevets

(11) EP 1 398 338 B1

(12) **EUROPÄISCHE PATENTSCHRIFT**

(45) Veröffentlichungstag und Bekanntmachung des Hinweises auf die Patenterteilung:
**11.08.2004 Patentblatt 2004/33**

(51) Int Cl.[7]: **C08G 77/06**

(21) Anmeldenummer: **03019623.2**

(22) Anmeldetag: **04.09.2003**

(54) **Verfahren zur Herstellung von Organopolysiloxanharz**

Process for the preparation of an organopolysiloxane resin

Procédé de préparation d'une résine organopolysiloxane

(84) Benannte Vertragsstaaten:
**DE FR GB**

(30) Priorität: **12.09.2002 DE 10242418**

(43) Veröffentlichungstag der Anmeldung:
**17.03.2004 Patentblatt 2004/12**

(73) Patentinhaber: **Wacker-Chemie GmbH**
**81737 München (DE)**

(72) Erfinder:
- **Köhler, Thomas, Dr.**
  **84556 Kastl (DE)**
- **Meisenberger, Manfred**
  **84489 Burghausen (DE)**
- **Ackermann, Wolfgang**
  **84489 Burghausen (DE)**

(74) Vertreter: **Budczinski, Angelika et al**
**c/o Wacker-Chemie GmbH,**
**Zentralabteilung PML,**
**Hanns-Seidel-Platz 4**
**81737 München (DE)**

(56) Entgegenhaltungen:
**EP-A- 0 707 028**
**DE-A- 3 939 846**
**DE-A- 4 419 706**
**US-A- 5 548 053**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 398 338 B1

## Beschreibung

Die Erfindung betrifft ein Verfahren zur kostenoptimierten Herstellung von Organopolysiloxanharz durch Hydrolyse und Kondensation von Silanen und/oder deren (Teil-)Hydrolysaten sowie dessen Verwendung.

Verfahren zur Herstellung von Organopolysiloxanharzen sind bereits bekannt. In DE-A 41 32 697 wird ein Verfahren zur Herstellung von Organopolysiloxanharz durch saure Hydrolyse von Alkoxylsilanen bzw. deren (Teil-)Hydrolysaten, gefolgt von basischer Nachbehandlung und anschließender Fällung in Wasser beschrieben. Des Weiteren wird in DE-A 42 16 139 ein Verfahren zur Herstellung von Organopolysiloxanharzen mittels Hydrolyse von Alkylsilikat in Gegenwart von Säure beschrieben, bei dem ein Teil des entstandenen Alkohols vor der basischen Umsetzung in einem wasserunlöslichen organischen Lösemittel abdestilliert wird und bei dem nach Neutralisation das ausgefallene Salz entfernt und die Reaktionsmasse gegebenenfalls destilliert wird. In DE-A 42 43 895 wird ein Verfahren zur Herstellung von Organopolysiloxanharzen durch Hydrolyse von Alkoxysilanen und/oder deren (Teil-)hydrolysaten in Gegenwart von mehrprotonigen Säuren beschrieben, bei dem nach Teilneutralisation der Säure der entstandene Alkohol vor der anschließenden basischen Umsetzung in einem wasserunlöslichen organischen.Lösemittel teilweise abdestilliert wird und bei dem nach darauffolgender Pufferung auf einen pH-Wert zwischen 6 und 8 erneut Wasser oder Alkohol abdestilliert sowie das ausgefallene Salz abfiltriert wird.

Nachteilig bei den genannten Verfahren ist, dass sich das bei der Neutralisation ausgefallene Salz vollständig meist nur sehr schwer durch Filtration entfernen lässt. Nach einer ersten Filtration verbleibt häufig eine leichte Trübung, welche dem Produkt eine aus Qualitätsgründen nicht akzeptable bläuliche Opaleszenz verleiht. Diese kann im allgemeinen nur durch mehrmaliger Filtration entfernen werden.

Besonders bei der Herstellung von höherviskosen Produkten (>100 mPa·s) nimmt die Filtrationsleistung mit geringfügig steigender Viskosität dramatisch ab und ein Entfernen der Opaleszenz wird in wirtschaftlichen Zeiträumen nicht mehr möglich.

Aus diesem Grund wird häufig bereits auf der Stufe eines niederviskosen Vorproduktes durch Filtration vom Salz befreit. Anschließend wird dann erst das höherviskose Zielprodukt durch nachfolgende Prozessschritte, wie z.B. Destillation, hergestellt.

Zum einen erfordert diese Vorgehensweise einen größeren Aufwand und ist somit kostenintensiver, und zum anderen kann während der Destillation zum hochviskosen Endprodukt erneut eine Trübung auftreten, was den Herstellprozess sehr zeitaufwändig und damit ebenfalls kostenintensiv werden lässt.

Es bestand die Aufgabe ein Verfahren bereitzustellen, nach dem Organopolysiloxanharze auf einfache Weise mit hohen Raum-Zeit-Ausbeuten hergestellt werden können.

Gegenstand der Erfindung ist ein Verfahren zur Herstellung von Organopolysiloxanharz, dadurch gekennzeichnet, dass

in einer 1. Stufe
mindestens ein Silan der Formel

$$R_3SiOR^1 \qquad (I)$$

und/oder dessen Hydrolysat $R_3SiOSiR_3$, wobei

R gleich oder verschieden sein kann und einen einwertigen organischen Rest bedeutet und
$R^1$ einen Alkylrest bedeutet,

und mindestens ein Silan der Formel

$$Si(OR^2)_4 \qquad (II)$$

und/oder dessen Teilhydrolysat, wobei

$R^2$ gleich oder verschieden sein kann und Alkylrest bedeutet,

sowie gegebenenfalls Organosiliciumverbindung, ausgewählt aus der Gruppe bestehend aus Silanen der Formel

$$R^3{}_aSi(OR^4)_{4-a} \qquad (III)$$

und/oder deren Teilhydrolysate, wobei

a 1 oder 2 ist,
$R^3$ gleich oder verschieden sein kann und einen einwertigen organischen Rest bedeutet und
$R^4$ und gleich oder verschieden sein kann und Alkylrest bedeutet,

Organopolysiloxane der Formel

$$(R^5{}_2SiO)_b \qquad (IV),$$

wobei

$R^5$ gleich oder verschieden sein kann und einen einwertigen organischen Rest bedeutet und
b eine ganze Zahl im Wert von 3 bis 8, vorzugsweise 4 oder 5, ist,

sowie deren Gemische,

mit Wasser in Gegenwart von Säure umgesetzt wird, wobei der entstandene Alkohol zumindest zum Teil abdestilliert wird,

in einer 2. Stufe
die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol und gegebenenfalls ein Teil des wasserunlöslichen organischen Lösungsmittels destillativ entfernt werden,

in einer 3. Stufe
die in der 2. Stufe erhaltene Reaktionsmasse mit Säure neutralisiert wird, gegebenenfalls noch vorhandenes Wasser, Alkohol und ein Teil des wasserunlöslichen organischen Lösungsmittels abdestilliert wird,

in einer 4. Stufe
die in der 3. Stufe erhaltene Reaktionsmasse mit Organopolysiloxanen sowie gegebenenfalls weiteren Komponenten versetzt wird und anschließend das aus der Neutralisation entstandene, ausgefallene Salz entfernt wird sowie

gegebenenfalls in einer 5. Stufe
die in der 4. Stufe erhaltene homogene Reaktionsmasse von wasserunlöslichem organischen Lösungsmittel befreit wird.

Im Rahmen der vorliegenden Erfindung sollen von dem Begriff Organopolysiloxane sowohl polymere, oligomere wie auch dimere Siloxane mitumfasst werden.

Bei den Resten R, $R^3$ und $R^5$ handelt es sich jeweils unabhängig voneinander vorzugsweise um einwertige Kohlenwasserstoffreste mit 1 bis 18 Kohlenstoffatomen.

Beispiele für die Reste R, $R^3$ und $R^5$ sind jeweils unabhängig voneinander Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl-, Allyl, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenyl-, Naphthylund Anthryl- und Phenanthrylrest; Alkarylreste, wie o-, m-, p-Tolylreste, Xylylreste und Ethylphenylreste; Aralkylreste, wie der Benzylrest, der alpha- und der ß-Phenylethylrest.

Beispiele für substituierte Kohlenwasserstoffreste als Rest R, $R^3$ oder $R^5$ sind jeweils unabhängig voneinander halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der Mercaptomethyl-, 2-Mercaptoethyl- und 3-Mercaptopropylrest; Cyanoalkylreste, wie der Cyanomethyl-, 2-Cyanoethyl- und 3-Cyanopropylrest; Acyloxyalkylreste, wie der Acryloxymethyl- und Methacryloxymethyl-, 3-Acryloxypropyl- und 3-Methacryloxypropylrest; Aminoalkylreste, wie der gegebenenfalls substituierte Aminomethylrest, der 3-Aminopropyl-, N-(2-Aminoethyl)-3-aminopropyl- und N-(2-Aminoethyl)-3-amino-(2-methyl)-propylrest; Carbamatreste, wie der Carbamatomethyl- und Carbamatopropylrest; Isocyanatreste, wieder Isocyanatomethyl- und Isocyanatopropylrest, Aminoarylreste, wie der Aminophenylrest; Hydroxyalkylreste, wie der Hydroxymethyl-, Hydroxypropylrest und Reste der Formel

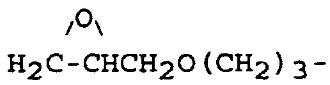

und

$$HOCH_2CH(OH)CH_2SCH_2CH_2-.$$

Bei den Resten R, $R^3$ und $R^5$ handelt es sich jeweils unabhängig voneinander besonders bevorzugt um den Methyl- und Vinylrest, beim Rest $R^3$ zusätzlich um den Propyl-, Isooctyl- und Phenylrest.

Beispiele für die Reste $R^1$, $R^2$ und $R^4$ sind die für Reste R, $R^3$ und $R^5$ angegebenen Beispiele für Alkylreste.

Bei den Resten $R^1$, $R^2$ und $R^4$ handelt es sich jeweils unabhängig voneinander bevorzugt um Alkylgruppen mit 1 bis 4 Kohlenstoffatomen.

Bei den Resten $R^1$, $R^2$ und $R^4$ handelt es sich jeweils unabhängig voneinander besonders bevorzugt um den Methyl- und Ethylrest.

Vorzugsweise werden bei dem erfindungsgemäßen Verfahren Silane der Formeln (I), (II) und gegebenenfalls (III) bzw. deren (Teil-)Hydrolysate eingesetzt, in denen $R^1$, $R^2$ sowie $R^4$ die gleiche Bedeutung haben.

Falls bei dem erfindungsgemäßen Verfahren Teilhydrolysate von Silanen der allgemeinen Formel (II) und (III) eingesetzt werden, sind jeweils solche mit bis zu 15 Siliciumatomen bevorzugt.

Beispiele für die im erfindungsgemäßen Verfahren eingesetzten Silane der Formel (I) bzw. deren Hydrolysate, also Disiloxane, sind Trimethylethoxysilan, Vinyldimethylethoxysilan, Hexamethyldisiloxan, 1,3-Diphenyltetramethyldisiloxan, 1,3-Bis(allyl)tetramethyldisiloxan, 1,3-Divinyltetramethylsiloxan, wobei Hexamethyldisiloxan und 1,3-Divinyltetramethylsiloxan besonders bevorzugt sind.

Beispiele für die im erfindungsgemäßen Verfahren eingesetzten Silane der Formel (II) sind Tetramethoxysilan, Tetraethoxysilan und Tetra-n-propoxysilan, wobei Tetraethoxysilan und dessen Teilhydrolysat besonders bevorzugt ist.

Beispiele für die im erfindungsgemäßen Verfahren gegebenenfalls eingesetzten Silane der Formel (III) sind Methyltrimethoxysilan, Vinyltrimethoxysilan, Mercaptomethyltrimethoxysilan, 3-Mercaptopropyltrimethoxysilan, Chlormethyltrimethoxysilan, 3-Chlorpropyltrimethoxysilan, Phenyltrimethoxysilan, o,m,p-Tolyltrimethoxysilan, Propyltrimethoxysilan, Methyltriethoxysilan, Vinyltriethoxysilan, Mercaptomethyltriethoxysilan, 3-Mercaptopropyltriethoxysilan, Chlormethyltriethoxysilan, 3-Chlorpropyltriethoxysilan, Cyanomethyltrimethoxysilan, Cyanomethyltriethoxysilan, Acryloxymethyltrimethoxysilan, Acryloxymethyltriethoxysilan, Aminomethyltrimethoxysilan, Aminomethyltriethoxysilan, 3-Aminopropyltriethoxysilan, N-(2-Aminoethyl)-3-aminopropyltrimethoxysilan, N-(2-Aminoethyl)-3-aminopropyldimethoxymethylsilan,N-(2-Aminoethyl)-3-amino-(2-methyl)-propyldimethoxymethylsilan; Phenyltriethoxysilan, o,m,p-Tolyltriethoxysilan, Propyltrimethoxysilan, Dimethyldiethoxysilan und Dimethyldimethoxysilan, wobei Methyltrimethoxysilan, Methyltriethoxysilan, Vinyltriethoxysilan, Phenyltriethoxysilan, o,m,p-Tolyltriethoxysilan und Propyltriethoxysilan bevorzugt eingesetzt werden.

Beispiele für die im erfindungsgemäßen Verfahren gegebenenfalls eingesetzten Organopolysiloxane der Formel (IV) sind Hexamethylcyclotrisiloxan, Octamethylcyclotetrasiloxan, Dekamethylcyclopentasiloxan, wobei Octamethylcyclotetrasiloxan und Dekamethylcyclopentasiloxan bevorzugt sind.

Falls Silan der Formel (III) bzw. dessen Teilhydrolysat und/oder Organopolysiloxan der Formel (IV) eingesetzt wird, werden diese in Mengen von vorzugsweise bis zu 15 Gewichtsprozent, bezogen auf das Gesamtgewicht der Siliciumverbindungen eingesetzt.

Bei den in der 4. Stufe des erfindungsgemäßen Verfahrens eingesetzten Organopolysiloxanen kann es sich um beliebige lineare, verzweigte oder cyclische Organopolysiloxane handeln, wobei solche aus Einheiten der Formel

$$R^6{}_c(OH)_dH_eSiO_{(4-c-d-e)/2} \qquad (V),$$

wobei

- $R^6$ gleich oder verschieden sein kann und einen einwertigen organischen Rest bedeutet,
- c 0, 1, 2 oder 3 ist,
- d 0, 1 oder 2, bevorzugt 0, ist und
- e 0, 1 oder 2, bevorzugt 0, ist,

mit der Maßgabe, dass die Summe $(c+d+e)\leq 3$ ist, bevorzugt sind.

Beispiele für Reste $R^6$ sind die für die Reste R, $R^3$ und $R^5$ angegebenen Beispiele.

Bevorzugt handelt es sich bei $R^6$ um gegebenenfalls substituierte Kohlenwasserstoffreste mit 1 bis 18 Kohlenstoffatomen, besonders bevorzugt um unsubstituierte Kohlenwasserstoffreste mit 1 bis 6 Kohlenstoffatomen, insbesondere um den Methyl-, Vinyloder Phenylrest.

Beispiele für die in der 4. Stufe des erfindungsgemäßen Verfahrens zu der in der 3. Stufe erhaltenen Reaktionsmasse zugegebenen Organopolysiloxane sind Hydroxydimethyl-, Hydrogendimethyl-, Hydroxyphenylmethyl-, Hydrogenphenylmethyl-, Hydroxydiphenyl-, Hydrogendiphenyl-, Hydroxyhydrogenmethyl-, Dihydrogenmethyl-, Hydroxyhydrogenphenyl-, Dihydrogenphenyl-, Trimethyl- und Vinyldimethylsilyloxy- terminierte lineare oder verzweigte Siloxane, die aus Dimethyl-, Hydrogenmethyl-, Diphenyl-, Phenylmethyl- und Phenylhydrogensiloxyeinheiten aufgebaut sein können.

Bei den im erfindungsgemäßen Verfahren eingesetzten Organopolysiloxanen aus Einheiten der Formel (V) kann es sich auch um cyclische Organopolysiloxane handeln, wie z.B. Hexamethylcyclotrisiloxan, Octamethylcyclotetrasiloxan und Dekamethylcyclopentasiloxän.

Bevorzugt handelt es sich bei den im erfindungsgemäßen Verfahren eingesetzten Organopolysiloxanen aus Einheiten der Formel (V) um lineare oder verzweigte Organopolysiloxane, besonders bevorzugt um $\alpha,\omega$-Divinyldimethylpolysiloxane.

Die im erfindungsgemäßen Verfahren eingesetzten Organopolysiloxane aus Einheiten der Formel (V) haben eine Viskosität von vorzugsweise 0,65 bis 100 000 mPa·s, besonders bevorzugt von 5 bis 50 000 mPa·s, insbesondere von 20 bis 20 000 mPa·s, jeweils bei 25°C.

Bei den in der 4. Stufe des erfindungsgemäßen Verfahrens gegebenenfalls eingesetzten weiteren Komponenten kann es sich um wasserunlösliche organische Lösungsmittel, mit welchen z.B. auf einfache Weise der Feststoffgehalt bzw. die Viskosität der Organopolysiloxanharz-Lösung eingestellt werden kann, Rheologiemodifier und Inhibitoren handeln.

In der 1. Stufe des erfindungsgemäßen Verfahrens wird vorzugsweise ein Gemisch aus Silan der Formel (I) und/oder dessen Hydrolysat, insbesondere solches mit R gleich Methyl- oder Vinylrest, und Silan der Formel (II) und/oder dessen Hydrolysat im Molverhältnis, bezogen auf Si-Einheiten, von vorzugsweise 0,4:1 bis 1,8:1, besonders bevorzugt von 0,5:1 bis 1,5:1, insbesondere 0,6:1 bis 1:1, eingesetzt, wobei $R^1$ in Formel (I) die gleiche Bedeutung hat wie $R^2$ in Formel (II).

Bei dem erfindungsgemäßen Verfahren wird in

der 1. Stufe zu einem Gemisch aus Silan der Formel (I) und/oder dessen Hydrolysat, Silan der Formel (II) und/oder dessen Teilhydrolysat sowie gegebenenfalls Organosiliciumverbindung der Formel (III) und/oder dessen Teilhydrolysat oder (IV) Wasser und Säure gegeben und vermischt.

Bei der 1. Stufe des erfindungsgemäßen Verfahrens wird dabei Wasser in Mengen von vorzugsweise 5 bis 30 Gewichtsprozent, besonders bevorzugt 5 bis 20 Gewichtsprozent, insbesondere 8 bis 18 Gewichtsprozent, jeweils bezogen auf das Gesamtgewicht der Reaktionsmasse der 1. Stufe vor der Destillation, eingesetzt.

Bei den in der 1. Stufe des erfindungsgemäßen Verfahrens eingesetzten Säuren kann es sich um die gleichen Säuren handeln, die auch bisher zur Hydrolyse von Silanen mit Alkoxygruppen verwendet wurden. Beispiele für derartige Säuren sind anorganische Säuren, wie HCl, $HClO_4$, $H_2SO_4$ und $H_3PO_4$, organische Säuren, wie Essigsäure, Ameisensäure, Propionsäure, p-Toluolsulfonsäure, Methansulfonsäure, Trifluormethansulfonsäure, Dodecylbenzolsulfonsäure, wobei HCl, Dodecylbenzolsulfonsäure und p-Toluolsulfonsäure bevorzugt und HCl besonders bevorzugt eingesetzt werden.

Zur Erzielung einer homogenen Reaktionsmasse wird in der 1. Stufe des erfindungsgemäßen Verfahrens Säure vorzugsweise in Mengen von 0,2 bis 50 mmol, besonders bevorzugt 2,5 bis 15 mmol, jeweils bezogen auf 1000 g der Reaktionsmasse der 1. Stufe vor der Destillation, eingesetzt. Bei höheren Säurekonzentrationen wird im allgemeinen keine Homogenität der Reaktionsmasse erzielt. Beispielsweise hat sich bei der Verwendung der besonders bevorzugten HCl als Säure ein Konzentrationsbereich von 100 bis 500 ppm, bezogen auf das Gesamtgewicht der Reaktionsmasse der 1. Stufe vor der Destillation, als vorteilhaft herausgestellt. Falls einer oder mehrere der Reste R, $R^3$ und $R^5$ die Bedeutung von basischen Stickstoff aufweisendem, organischen Rest hat, muss noch zusätzlich die zur Neutralisation dieser Reste benötigte Säuremenge hinzugefügt werden.

Der bei der Hydrolyse in der 1. Stufe des erfindungsgemäßen Verfahrens entstehende Alkohol wird während oder nach, insbesondere nach, der Hydrolyse ganz oder teilweise entfernt. Je nach Art des Alkohols bzw. der Einsatzmenge an Wasser kann das Destillat gewisse Mengen Wasser enthalten. Vorzugsweise wird der Alkohol nach der Hydrolyse in dem Maße abdestilliert, dass die Reaktionsmasse homogen bleibt.

Besonders bevorzugt wird 50 bis 90 Gewichtsprozent Alkohol, bezogen auf das Gesamtgewicht an entstandenem Alkohol, destillativ entfernt.

Die 1. Stufe des erfindungsgemäßen Verfahrens wird vorzugsweise bei einer Temperatur von 20°C bis zur Siedetemperatur der Reaktionsmasse, besonders bevorzugt bei der Siedetemperatur der Reaktionsmasse, und einem Druck zwischen bevorzugt 900 und 1100 hPa durchgeführt.

Die 1. Stufe des erfindungsgemäßen Verfahrens ist nach vorzugsweise 30 Minuten bis 5 Stunden, besonders bevorzugt 1 bis 3 Stunden, abgeschlossen.

Nach Beendigung der 1. Stufe des erfindungsgemäßen Verfahrens wird Base in mindestens einer solchen Menge, die zur Erreichung einer basischen Reaktionsmasse notwendig ist, gegebenenfalls weitere Stoffe sowie wasserunlösliches organisches Lösungsmittel zugegeben. Es handelt sich dabei je nach eingesetzter Base im allgemeinen um Basenmengen im Bereich von 0,02 bis 2,0 Gewichtsprozent, bezogen auf das Gesamtgewicht der Reaktionsmasse der 2. Stufe vor der Destillation.

Vorzugsweise wird in der 2. Stufe soviel Base zugegeben, dass der pH-Wert im Bereich von 8,0 bis 14,0, bevorzugt von 9,0 bis 12,0, liegt.

Als Basen können in der 2. Stufe des erfindungsgemäßen Verfahrens alle Basen eingesetzt werden, die auch bisher als Katalysatoren bei Kondensationsreaktionen eingesetzt wurden. Beispiele für solche Basen sind Alkalihydroxide, wie Natriumhydroxid und Kaliumhydroxid, Alkalisiliconate, wie Natriumsiliconat und Kaliumsiliconat, Amine, wie beispielsweise Methylamin, Dimethylamin, Ethylamin, Diethylamin, Triethylamin und n-Butylamin, Ammoniumverbindungen, wie etwa Tetramethylammoniumhydroxid, Tetra-n-butylammoniumhydroxid und Benzyltrimethylammoniumhydroxid, wobei Natriumhydroxid, Kaliumhydroxid, Methylamin, Ethylamin, Diethylamin und Benzyltrimethylammoniumhydroxid bevorzugt und Natriumhydroxid, Kaliumhydroxid und Methylamin besonders bevorzugt sind.

Unter dem Begriff wasserunlösliche organische Lösungsmittel sollen im folgenden bei Raumtemperatur und dem Druck der umgebenden Atmosphäre mit Wasser höchstens in Mengen bis zu 1 g/l mischbare Lösungsmittel verstanden werden.

Beispiele für wasserunlösliche organische Lösungsmittel sind Kohlenwasserstoffe, wie Pentan, n-Hexan, cyclo-Hexan, Octen, Decen, Dodecen, Tetradecen, Hexadecen, Octadecen, Benzol, Toluol und o,m,p-Xylol oder Gemische höhersiedender Kohlenwasserstofffraktionen, aus z.B. C8 bis C10-Alkanen mit einem Siedebereich von 116 bis 136°C, C9 bis C13-Alkanen mit einem Siedebereich von 155 bis 173°C, C10 bis C14-Alkanen mit einem Siedebereich von 173 bis 190°C, C11 bis C15-Alkanen mit einem Siedebereich von 189 bis 207°C, C11 bis C16-Alkanen mit einem Siedebereich von 204 bis 247°C, wobei 1-Dodecen, Kohlenwasserstoffgemische mit C8 bis C10-Alkanen mit einem Siedebereich von 116 bis 136°C, Toluol und o,m, p-Xylol besonders bevorzugt sind.

Das in der 2. Stufe des erfindungsgemäßen Verfahrens eingesetzte wasserunlösliche organische Lösungsmittel wird mindestens in einer solchen Menge verwendet, die zur Erhaltung einer homogenen Reaktionsmasse ausreicht. Es handelt sich dabei bevorzugt um Mengen von bis zu 50 Gewichtsprozent, besonders

bevorzugt bis zu 40 Gewichtsprozent wasserunlösliches organisches Lösungsmittel, jeweils bezogen auf das Gesamtgewicht der Reaktionsmasse der 2. Stufe vor der Destillation. Insbesondere werden soviel Volumenteile an wasserunlöslichem organischen Lösungsmittel zugegeben, wie Alkohol und gegebenenfalls Wasser in der 1. Stufe abdestilliert wurde.

Bei der in der 2. Stufe des erfindungsgemäßen Verfahrens durchgeführten Destillation werden das in der Reaktionsmischung enthaltene Wasser sowie der restliche Alkohol vollständig bzw. nahezu vollständig abdestilliert, wobei gegebenenfalls wasserunlösliches organisches Lösungsmittel mitabdestilliert wird.

Mit der in der 2. Stufe des erfindungsgemäßen Verfahrens durchgeführten Destillation wird vorteilhafterweise sofort nach der Basenzugabe begonnen. Die Destillation ist zur Erzielung eines von Alkoxy- und/oder Hydroxygruppen freien Organopolysiloxanharzes bzw. eines Organopolysiloxanharzes mit einem niedrigen Alkoxy- und/oder Hydroxygehalt notwendig.

Bei der Basenzugabe in der 2. Stufe zu der sauren Reaktionsmasse der 1. Stufe wird ein Salz gebildet, welches nach der Destillation in der 2. Stufe ausfallen kann.

Die 2. Stufe des erfindungsgemäßen Verfahrens wird bevorzugt bei der Siedetemperatur der Reaktionsmasse und einem Druck zwischen 900 und 1100 hPa durchgeführt.

Die 2. Stufe des erfindungsgemäßen Verfahrens ist nach vorzugsweise 0,5 bis 5 Stunden, besonders bevorzugt 1 bis 3 Stunden, abgeschlossen.

Nach Beendigung der 2. Stufe des erfindungsgemäßen Verfahrens wird die Reaktionsmischung in einer 3. Stufe mit Säure neutralisiert, gegebenenfalls noch vorhandenes Wasser, Alkohol und ein Teil des wasserunlöslichen organischen Lösungsmittels abdestilliert.

Zur Neutralisation sind als Säure alle in der 1. Stufe genannten Säuren geeignet, wobei vorzugsweise die gleiche Säure wie in der 1. Stufe verwendet wird.

Falls zur Neutralisation in der 3. Stufe des erfindungsgemäßen Verfahrens mit Wasser verdünnte Säuren verwendet werden und/oder die Destillation in der 2. Stufe nicht vollständig war, muss in der 3. Stufe Wasser abdestilliert werden, wobei nach der Destillation das in der Reaktionsmasse vorhandene Salz im Allgemeinen vollständig ausfällt. Je nach Art des wasserunlöslichen organischen Lösungsmittels, insbesondere bei Toluol, 1-Dodecen und Xylol, wird das Wasser im Gemisch mit diesem organischen Lösungsmittel abdestilliert.

Falls zur Neutralisation in der 3. Stufe des erfindungsgemäßen Verfahrens wasserfreie Säuren verwendet werden und die Destillation in der 2. Stufe in bezug auf Wasser vollständig war, kann auf die Destillation in der 3. Stufe verzichtet werden, wobei das bei der Neutralisation gebildete Salz im Allgemeinen sofort ausfällt.

Nach Beendigung der 3. Stufe des erfindungsgemäßen Verfahrens werden der Reaktionsmischung in einer 4. Stufe Organopolysiloxane sowie gegebenenfalls weitere Komponenten zugesetzt, und anschließend wird das aus der Neutralisation entstandene, ausgefallene Salz, vorzugsweise durch Filtration, von der Reaktionsmischung abgetrennt.

Bei dem erfindungsgemäßen Verfahren werden in der 4. Stufe Organopolysiloxane in Mengen von bevorzugt 0,1 bis 1000 Gewichtsteilen, besonders bevorzugt von 0,1 bis 100 Gewichtsteilen, insbesondere von 0,1 bis 60 Gewichtsteilen, jeweils bezogen auf 100 Gewichtsteile der in der 1. Stufe eingesetzten Gesamtmenge an Organosiliciumverbindungen der Formel (I) bis (IV), eingesetzt.

Falls in der 4. Stufe des erfindungsgemäßen Verfahrens weitere Komponenten eingesetzt werden, handelt es sich bevorzugt um die gleichen wasserunlöslichen organischen Lösungsmittel, welche bereits in der 2. Stufe eingesetzt wurden, Rheologiemodifier und Inhibitoren, wie 1-Ethinyl-1-cyclohexanol, 2-Methyl-3-butin-2-ol, 3-Methyl-1-pentin-3-ol, 2,5-Dimethyl-3-hexin-2,5-diol, 3,5-Dimethyl-1-hexin-3-ol, 3,7-Dimethyl-oct-1-in-6-en-3-ol, eine Mischung aus Diallylmaleinat und Vinylacetat sowie Maleinsäuremonoester, wie Monooctylmaleinat, wobei als weitere Komponenten wasserunlösliche organische Lösungsmittel und Inhibitoren besonders bevorzugt sind.

Falls in der 4. Stufe des erfindungsgemäßen Verfahrens als weitere Komponenten wasserunlösliche organische Lösungsmittel eingesetzt werden, die zur Einstellung des Feststoffgehaltes bzw. der Viskosität der Organopolysiloxanharz-Lösung dienen können, so werden diese bevorzugt in Mengen von 0,1 bis 1000 Gewichtsteilen, besonders bevorzugt von 0,1 bis 100 Gewichtsteilen, insbesondere von 1 bis 50 Gewichtsteilen, jeweils bezogen auf 100 Gewichtsteile der in der 1. Stufe eingesetzten Gesamtmenge an Organosiliciumverbindungen der Formel (I) bis (IV) eingesetzt.

Falls in der 4. Stufe des erfindungsgemäßen Verfahrens als weitere Komponenten Rheologiemodifier eingesetzt werden, so handelt es sich bevorzugt um Mengen von 0,01 bis 100 Gewichtsteilen, besonders bevorzugt von 0,05 bis 50 Gewichtsteilen, insbesondere von 0,1 bis 10 Gewichtsteilen, jeweils bezogen auf 100 Gewichtsteile der in der 1. Stufe eingesetzten Gesamtmenge an Organosiliciumverbindungen der Formel (I) bis (IV).

Falls in der 4. Stufe des erfindungsgemäßen Verfahrens als weitere Komponenten Inhibitoren eingesetzt werden, so handelt es sich bevorzugt um Mengen von 0,01 bis 100 Gewichtsteilen, besonders bevorzugt von 0,05 bis 50 Gewichtsteilen, insbesondere von 0,1 bis 10 Gewichtsteilen, jeweils bezogen auf 100 Gewichtsteile der in der 1. Stufe eingesetzten Gesamtmenge an Organosiliciumverbindungen der Formel (I) bis (IV).

Nach Beendigung der 4. Stufe des erfindungsgemäßen Verfahrens wird das erfindungsgemäß hergestellte, wasserunlösliches organisches Lösungsmittel enthaltende Organopolysiloxanharz gegebenenfalls in einer 5. Stufe vom wasserunlöslichen, organischen Lösungsmittel befreit. Dies geschieht vorzugsweise durch Destillation oder Sprühtrocknung.

Falls es sich in der 5. Stufe des erfindungsgemäßen Verfahrens um eine Destillation handelt, wird diese vorzugsweise unter Inertgas, wie etwa Stickstoff, durchgeführt. Die Rührguttemperatur liegt je nach verwendetem wasserunlöslichen organischen Lösungsmittel vorzugsweise zwischen 20 bis 250°C. Das wasserunlösliche organische Lösungsmittel kann dabei wieder rückgewonnen werden.

Falls es sich in der 5. Stufe des erfindungsgemäßen Verfahrens um eine Sprühtrocknung handelt, wird diese vorzugsweise unter Inertgas, wie etwa Stickstoff, durchgeführt. Die Eintrittstemperatur liegt je nach verwendetem wasserunlöslichen organischen Lösungsmittel vorzugsweise zwischen 60 bis 350°C und die Austrittstemperatur vorzugsweise zwischen 50 und 200°C. Das wasserunlösliche organische Lösungsmittel kann dabei wieder rückgewonnen werden.

Nach einer bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe

mit Wasser und 0,2 bis 50 mmol Säure, bezogen auf 1000 g der Reaktionsmasse der 1. Stufe vor der Destillation, vermischt, bei der Siedetemperatur der Reaktionsmasse und einem Druck zwischen 900 und 1100 hPa umgesetzt und entstandener Ethanol abdestilliert,

in einer 2. Stufe

die in der 1. Stufe erhaltene homogene Reaktionsmasse in Anwesenheit von Base, ausgewählt aus der Gruppe bestehend aus Natriumhydroxid, Kaliumhydroxid und Methylamin, und einem wasserunlöslichen organischen Lösungsmittel, insbesondere Toluol, 1-Dodecen oder Xylol, bei der Siedetemperatur der Reaktionsmasse und einem Druck zwischen 900 und 1100 hPa umgesetzt, wobei Wasser sowie Ethanol vollständig bzw. nahezu vollständig und gegebenenfalls ein Teil des wasserunlöslichen organischen Lösungsmittels abdestilliert wird,

in einer 3. Stufe

die in der 2. Stufe erhaltene Reaktionsmasse mit Säure neutralisiert, gegebenenfalls Wasser und Ethanol vollständig bzw. nahezu vollständig und gegebenenfalls ein Teil des wasserunlöslichen organischen Lösungsmittels abdestilliert und

in einer 4. Stufe

die in der 3. Stufe erhaltene Reaktionsmasse mit Organopolysiloxanen sowie gegebenenfalls weiteren Komponenten versetzt und anschließend das bei der Neutralisation entstandene, ausgefallene Salz abfiltriert sowie gegebenenfalls

in einer 5. Stufe

die in der 4. Stufe erhaltene Reaktionsmasse in Stickstoffatmosphäre destilliert bzw. sprühgetrocknet.

Nach einer besonders bevorzugten Ausführungsform des erfindungsgemäßen Verfahrens wird Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe

mit Wasser und 100 bis 500 ppm HCl, bezogen auf das Gesamtgewicht der Reaktionsmasse der 1. Stufe vor der Destillation, vermischt, bei der Siedetemperatur der Reaktionsmasse und einem Druck zwischen 900 und 1100 hPa umgesetzt und ca. 70 Gewichtsprozent des entstandenen Ethanols, bezogen auf die Gesamtmenge des entstandenen Ethanols, abdestilliert,

in einer 2. Stufe

die in der 1. Stufe erhaltene homogene Reaktionsmasse in Anwesenheit von Base, ausgewählt aus der Gruppe bestehend aus Natriumhydroxid, Kaliumhydroxid und Methylamin, und Toluol, 1-Dodecen oder Xylol als wasserunlösliches organisches Lösungsmittel bei der Siedetemperatur der Reaktionsmasse und einem Druck zwischen 900 und 1100 hPa umgesetzt, wobei Wasser sowie Ethanol vollständig bzw. nahezu vollständig und gegebenenfalls ein Teil des wasserunlöslichen organischen Lösungsmittels abdestilliert wird,

in einer 3. Stufe

die in der 2. Stufe erhaltene Reaktionsmasse mit HCl neutralisiert, Wasser und gegebenenfalls Ethanol vollständig bzw. nahezu vollständig und gegebenenfalls ein Teil des wasserunlöslichen organischen Lösungsmittels abdestilliert und

in einer 4. Stufe

die in der 3. Stufe erhaltene Reaktionsmasse mit Vinylgruppen aufweisenden Organopolysiloxanen mit einer Viskosität von 5 bis 50 000 mPa·s versetzt und anschließend das bei der Neutralisation entstandene, ausgefallene Salz abfiltriert sowie gegebenenfalls

in einer 5. Stufe

die in der 4. Stufe erhaltene Reaktionsmasse in Stickstoffatmosphäre destilliert bzw. sprühgetrocknet.

Falls bei dem erfindungsgemäßen Verfahren die 5. Stufe nicht durchgeführt wird, fällt das Organopolysiloxanharz in der Regel im Gemisch mit wasserunlöslichem organischen Lösungsmittel als sogenanntes Harzkonzentrat an.

Das erfindungsgemäße Organopolysiloxanharz hat ein durchschnittliches Molekulargewicht von vorzugsweise 500 bis 100 000 g/mol und weist durchschnittlich keine oder höchstens bis zu 8 Molprozent Alkoxygruppen, bezogen auf tetrafunktionelle Si-Einheiten ($SiO_{4/2}$), und keine oder höchstens 0,8 Gewichtsprozent Hydroxygruppen, bezogen auf das Gesamtgewicht an Organopolysiloxanharz, auf. Das erfindungsgemäße Organopolysiloxanharz ist zumindest zum Teil, vorzugsweise jedoch ganz, in flüssigem Organopolysiloxan löslich.

Beispiele für die erfindungsgemäßen Organopolysiloxanharze sind $[Me_3SiO_{1/2}]_x[SiO_{4/2}]_y$ mit Me gleich Methylrest und einem Verhältnis von x:y von 0,6 : 1 bis 1 : 1 sowie $[Me_3SiO_{1/2}]_x[Me_2ViSiO_{1/2}]_y[SiO_{4/2}]_z$ mit Me gleich Methylrest, Vi gleich Vinylrest und einem Verhältnis von (x+y):z von 0,6 : 1 bis 1 : 1 und einem Verhältnis von x:y von 98:2 bis 60:40.

Das erfindungsgemäße Verfahren hat den Vorteil, dass es sehr einfach in der Durchführung und sehr gut reproduzierbar ist und dabei hohe Raum-Zeit-Ausbeuten liefert. So lassen sich besonders höher viskose Reaktionsmischungen nach Zugabe von Organopolysiloxanen vom bei der Neutralisation entstandenen, ausgefallenen Salz vorzugsweise durch einmalige Filtration befreien, ohne dass eine schwer filtrierbare Opaleszenz beobachtet wird, welche nur unter signifikantem Ausbeuteverlust aufwändig entfernt werden kann.

Das verwendete wasserunlösliche organische Lösungsmittel sowie der Alkohol können auf einfache Weise rückgewonnen werden. Ein weiterer Vorteil besteht darin, dass bei dem erfindungsgemäßen Verfahren keine flüssig/flüssig-Phasentrennung durchgeführt wird und dass dadurch keine Ausbeuteverluste auftreten.

Aufgrund der homogenen Reaktionsführung und der niedrigen Säurekonzentrationen entsteht ein Harz mit einem nur geringen Anteil niedermolekularer Harzfraktionen.

Nach dem erfindungsgemäßen Verfahren werden Organopolysiloxanharze mit einer großen Reinheit und keinen Alkoxy- und/oder Hydroxygruppen bzw. einem niedrigen Gehalt an Alkoxy- und/oder Hydroxygruppen erhalten, die eine hohe Lagerstabilität besitzen und sich ausgezeichnet zu Produkten mit einer hohen Lagerstabilität weiterverarbeiten lassen. Aus den erfindungsgemäßen Harzen können daher ausgezeichnet durch Sprühtrocknung Pulver hergestellt werden.

Das erfindungsgemäße Verfahren mit in der 5. Stufe durchgeführter Sprühtrocknung zur Herstellung von Organopolysiloxanpulver hat den Vorteil, dass das Harz bei der Sprühtrocknung nicht verändert wird und das erhaltene Pulver mit einer hohen Lösungskinetik anfällt. Die erfindungsgemäßen Organopolysiloxanharzpulver haben darüberhinaus den Vorteil, dass sie im wesentlichen frei von organischem Lösungsmittel anfallen und eine gute Lagerstabilität aufweisen.

Die erfindungsgemäßen Organopolysiloxanharzpulver haben eine durchschnittliche Partikelgröße von vorzugsweise 1 bis 500 μm. Die erfindungsgemäßen Organopolysiloxanharzpulver sind zumindest zum Teil, vorzugsweise jedoch ganz, in Organopolysiloxanen und gängigen organischen Lösungsmitteln löslich. In organischen Lösungsmitteln, wie Toluol, Aceton, Hexan und Tetrahydrofuran, sind die erfindungsgemäßen Organopolysiloxanharzpulver ausgezeichnet löslich, während sie in niedrigen Alkoholen, wie Methanol und Ethanol, nur zum Teil löslich sind.

Die erfindungsgemäßen Organopolysiloxanharze eignen sich für alle Anwendungen, für die auch bisher Organopolysiloxanharze eingesetzt werden konnten. So können die erfindungsgemäßen Organopolysiloxanharze bzw. -konzentrate und Organopolysiloxanharzpulver beispielsweise als Schaumstabilisatoren, als Zusatz zu Antischaummitteln und kosmetischen Formulierungen (z.B. Fixativ in Haarfestigern), Tonern, Lack- und anderen Beschichtungssystemen, wie etwa Papierbeschichtungsmassen, verwendet werden. Sie können aber auch anstelle hydrophobierter hochdisperser Kieselsäure als Füllstoffe in Kunststoffen, insbesondere Siliconkautschuk, verwendet werden.

In den nachfolgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 20°C bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

**Beispiel 1**

Zu 900 g Tetraethoxysilan mit einem 40 %igen $SiO_2$-Anteil (käuflich erhältlich unter der Bezeichnung TES 40 bei der Wacker-Chemie GmbH, München), 350 g Hexamethyldisiloxan und 55,4 g 1,3-Divinyltetramethyldisiloxan werden 210 g Wasser und 1,9 g 20 %ige Salzsäure in Wasser gegeben und für eine Dauer von 2,5 Stunden bei einer Temperatur von 78°C auf Rückfluss erhitzt. Anschließend werden innerhalb von einer Stunde 483 g Destillat abgenommen. Das erhaltene Destillat enthält 11 % Wasser und 89 % Ethanol.

Das homogene Reaktionsgemisch versetzt man dann mit 481 g 1-Dodecen und 4 g einer 25 %igen Lösung von NaOH in Wasser und destilliert 239 g flüchtiger Bestandteile ab.

Dann neutralisiert man das homogene Reaktionsgemisch mit 2,1 ml 20%iger Salzsäure in Wasser und destilliert 273 g flüchtiger Bestandteile ab.

Anschließend werden 125 g eines vinylterminierten Dimethylpolysiloxans mit einer Viskosität von 20 000 mPa·s bei 25°C, 20 g 1-Dodecen zur Festgehaltseinstellung und 3 g Ethinylcyclohexanol zugegeben.

Die erhaltene Harzmischung wird nach Zugabe von 4 g eines Filterhilfsmittels einmal filtriert und sofort als klare Lösung erhalten.

Man erhält 1131 g (98 % der Theorie) einer neutralen Organopolysiloxanharzlösung in 1-Dodecen mit einem Festgehalt von 77,9 % und einer Viskosität von 555 $mm^2/s$.

Bezogen auf tetrafunktionelle Si-Einheiten ($SiO_{4/2}$) weist das Harz nach NMR-Messungen einen

Restethoxygehalt von 6,4 Mol-% auf und einen OH-Gehalt von 0,22 %.

**Beispiel 2**

Zu 900 g Tetraethoxysilan mit einem 40 %igen $SiO_2$-Anteil, 350 g Hexamethyldisiloxan und 55,4 g 1,3-Divinyltetramethyldisiloxan wird eine Mischung aus 210 g Wasser und 1,6 g konz. Schwefelsäure gegeben und für eine Dauer von 2,5 Stunden bei einer Temperatur von 78°C auf Rückfluss erhitzt. Anschließend werden innerhalb von einer Stunde 477 g Destillat abgenommen. Das erhaltene Destillat enthält 11 % Wasser und 89 % Ethanol.

Das homogene Reaktionsgemisch versetzt man dann mit 481 g 1-Dodecen und 4 g einer 25 %igen Lösung von NaOH in Wasser und destilliert 264 g flüchtiger Bestandteile ab.

Dann neutralisiert man das homogene Reaktionsgemisch mit 0,5 ml konz. Schwefelsäure in Wasser und destilliert 271 g flüchtiger Bestandteile ab. Anschließend werden 125 g eines vinylterminierten Dimethylpolysiloxans mit einer Viskosität von 20 000 mPa·s bei 25°C sowie 20 g 1-Dodecen zur Festgehaltseinstellung neben 3 g Ethinylcyclohexanol zugegeben.

Die erhaltene Harzmischung wird nach Zugabe von 4 g eines Filterhilfsmittels einmal filtriert und sofort als klare Lösung erhalten.

Man erhält 1112 g (98 % der Theorie) einer neutralen Organopolysiloxanharzlösung in 1-Dodecen mit einem Festgehalt von 78,1 % und einer Viskosität von 690 $mm^2/s$.

Bezogen auf tetrafunktionelle Si-Einheiten ($SiO_{4/2}$) weist das Harz nach NMR-Messungen einen Restethoxygehalt von 5,9 Mol-% auf und einen OH-Gehalt von 0,16 %.

**Vergleichsbeispiel 1**

Zu 900 g Tetraethoxysilan mit einem 40 %igen $SiO_2$-Anteil, 350 g Hexamethyldisiloxan und 55,4 g 1,3-Divinyltetramethyldisiloxan werden 210 g Wasser und 1,9 g 20 %ige Salzsäure in Wasser gegeben und für eine Dauer von 2,5 Stunden bei einer Temperatur von 78°C auf Rückfluss erhitzt. Anschließend werden innerhalb von einer Stunde 484 g Destillat abgenommen. Das erhaltene Destillat enthält 11 % Wasser und 89 % Ethanol.

Das homogene Reaktionsgemisch versetzt man dann mit 481 g 1-Dodecen und 4 g einer 25 %igen Lösung von NaOH in Wasser und destilliert 281 g flüchtiger Bestandteile ab.

Dann neutralisiert man das homogene Reaktionsgemisch mit 2,1 ml 20%iger Salzsäure in Wasser und destilliert 6 g flüchtiger Bestandteile ab.

Die erhaltene Harzmischung wird nach Zugabe von 4 g eines Filterhilfsmittels filtriert und als opaleszierende Lösung erhalten. Nach erneuter Filtration fällt ein klares Produkt mit einem Festgehalt von 59,8 % an.

Anschließend werden 265 g flüchtiger Bestandteile abdestilliert und nach dem Abkühlen 125 g eines vinylterminierten Dimethylpolysiloxans mit einer Viskosität von 20 000 mPa·s bei 25°C sowie 20 g 1-Dodecen zur Festgehaltseinstellung zugegeben.

Man erhält 1131 g (98 % der Theorie) einer neutralen und klaren Organopolysiloxanharzlösung in 1-Dodecen mit einem Festgehalt von 78,7 % und einer Viskosität von 623 $mm^2/s$.

Bezogen auf tetrafunktionelle Si-Einheiten ($SiO_{4/2}$) weist das Harz nach NMR-Messungen einen Restethoxygehalt von 6,3 Mol-% auf und einen OH-Gehalt von 0,11 %.

**Vergleichsbeispiel 2**

Zu 900 g Tetraethoxysilan mit einem 40 %igen $SiO_2$-Anteil, 350 g Hexamethyldisiloxan und 55,4 g 1,3-Divinyltetramethyldisiloxan werden 210 g Wasser und 1,9 g 20 %ige Salzsäure in Wasser gegeben und für eine Dauer von 2,5 Stunden bei einer Temperatur von 78°C auf Rückfluss erhitzt. Anschließend werden innerhalb von einer Stunde 484 g Destillat abgenommen. Das erhaltene Destillat enthält 11 % Wasser und 89 % Ethanol.

Das homogene Reaktionsgemisch versetzt man dann mit 481 g 1-Dodecen und 4 g einer 25 %igen Lösung von NaOH in Wasser und destilliert 280 g flüchtiger Bestandteile ab.

Dann neutralisiert man das homogene Reaktionsgemisch mit 2,1 ml 20%iger Salzsäure in Wasser und destilliert 270 g flüchtiger Bestandteile ab.

Zur erhaltenen Harzmischung wurden 4 g eines Filterhilfsmittels gegeben und anschließend wurde filtriert. Es zeigte sich jedoch, dass unter den üblichen Filtrationsbedingungen und Filtrationszeiten wie bei Beispiel 1 und 2 nur geringe Mengen eines opaleszierenden Filtrates erhalten werden konnten, so dass der Filtrationsversuch abgebrochen wurde.

**Patentansprüche**

1. Verfahren zur Herstellung von Organopolysiloxanharz, **dadurch gekennzeichnet, dass**

in einer 1. Stufe
mindestens ein Silan der Formel

$$R_3SiOR^1 \quad (I)$$

und/oder dessen Hydrolysat $R_3SiOSiR_3$, wobei

R gleich oder verschieden sein kann und einen einwertigen organischen Rest be-

deutet und

$R^1$ einen Alkylrest bedeutet,

und mindestens ein Silan der Formel

$$Si(OR^2)_4 \quad (II)$$

und/oder dessen Teilhydrolysat, wobei

$R^2$ gleich oder verschieden sein kann und Alkylrest bedeutet,

sowie gegebenenfalls Organosiliciumverbindung, ausgewählt aus der Gruppe bestehend aus Silanen der Formel

$$R^3_aSi(OR^4)_{4-a} \quad (III)$$

und/oder deren Teilhydrolysate, wobei

a 1 oder 2 ist,

$R^3$ gleich oder verschieden sein kann und einen einwertigen organischen Rest bedeutet und

$R^4$ gleich oder verschieden sein kann und Alkylrest bedeutet,

und

Organopolysiloxane der Formel

$$(R^5{}_2SiO)_b \quad (IV),$$

wobei

$R^5$ gleich oder verschieden sein kann und einen einwertigen organischen Rest bedeutet und

b 5, eine ganze Zahl im Wert von 3 bis 8, vorzugsweise 4 oder ist,

sowie deren Gemische,

mit Wasser in Gegenwart von Säure umgesetzt wird, wobei der entstandene Alkohol zumindest zum Teil abdestilliert wird,

in einer 2. Stufe

die in der 1. Stufe erhaltene homogene Reaktionsmasse in Anwesenheit von Base sowie mindestens einer solchen Menge an wasserunlöslichem organischen Lösungsmittel, die zur Erhaltung einer homogenen Reaktionsmasse ausreicht, umgesetzt wird und Wasser sowie Alkohol und gegebenenfalls ein Teil des wasserunlöslichen organischen Lösungsmittels destillativ entfernt werden,

in einer 3. Stufe

die in der 2. Stufe erhaltene Reaktionsmasse mit Säure neutralisiert wird, gegebenenfalls noch vorhandenes Wasser, Alkohol und ein Teil des wasserunlöslichen organischen Lösungsmittels abdestilliert wird,

in einer 4. Stufe

die in der 3. Stufe erhaltene Reaktionsmasse mit Organopolysiloxanen sowie gegebenenfalls weiteren Komponenten versetzt wird und anschließend das aus der Neutralisation entstandene, ausgefallene Salz entfernt wird sowie

gegebenenfalls in einer 5. Stufe

die in der 4. Stufe erhaltene homogene Reaktionsmasse von wasserunlöslichem organischen Lösungsmittel befreit wird.

**2.** Verfahren nach Anspruch 1, **dadurch gekennzeichnet, dass** es sich bei den in der 4. Stufe eingesetzten Organopolysiloxanen um solche aus Einheiten der Formel

$$R^6{}_c(OH)_dH_eSiO_{(4-c-d-e)/2} \quad (V)$$

handelt, wobei

$R^6$ gleich oder verschieden sein kann und einen einwertigen organischen Rest bedeutet,

c 0, 1, 2 oder 3 ist,

d 0, 1 oder 2, bevorzugt 0, ist und

e 0, 1 oder 2, bevorzugt 0, ist,

mit der Maßgabe, dass die Summe $(c+d+e)\leq 3$ ist.

**3.** Verfahren nach Anspruch 1 oder 2, **dadurch gekennzeichnet, dass** es sich bei den Organopolysiloxanen aus Einheiten der Formel (V) um lineare oder verzweigte Organopolysiloxane handelt.

**4.** Verfahren nach einem oder mehreren der Ansprüche 1 bis 3, **dadurch gekennzeichnet, dass** die in der 4. Stufe eingesetzten Organopolysiloxane aus Einheiten der Formel (V) eine Viskosität von 0,65 bis 100 000 mPa·s, bei 25°C, haben.

**5.** Verfahren nach einem oder mehreren der Ansprüche 1 bis 4, **dadurch gekennzeichnet, dass** Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe
mit Wasser und 0,2 bis 50 mmol Säure, bezogen auf 1000 g der Reaktionsmasse der 1. Stufe vor der Destillation, vermischt wird, bei der Siedetemperatur der Reaktionsmasse und einem Druck zwischen 900 und 1100 hPa umgesetzt und entstandener Ethanol abdestilliert wird,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und einem wasserunlöslichen organischen Lösungsmittel, insbesondere Toluol, 1-Dodecen oder Xylol, bei der Siedetemperatur der Reaktionsmasse und einem Druck zwischen 900 und 1100 hPa umgesetzt wird,
wobei Wasser sowie Ethanol vollständig bzw. nahezu vollständig und gegebenenfalls ein Teil des wasserunlöslichen organischen Lösungsmittels abdestilliert werden,
in einer 3. Stufe
die in der 2. Stufe erhaltene Reaktionsmasse mit Säure neutralisiert wird, gegebenenfalls Wasser und Ethanol vollständig bzw. nahezu vollständig und gegebenenfalls ein Teil des wasserunlöslichen organischen Lösungsmittels abdestilliert werden und
in einer 4. Stufe
die in der 3. Stufe erhaltene Reaktionsmasse mit Organopolysiloxanen sowie gegebenenfalls weiteren Komponenten versetzt wird und anschließend das bei der Neutralisation entstandene, ausgefallene Salz abfiltriert wird sowie gegebenenfalls
in einer 5. Stufe
die in der 4. Stufe erhaltene Reaktionsmasse in Stickstoffatmosphäre destilliert bzw. sprühgetrocknet wird.

**6.** Verfahren nach einem oder mehreren der Ansprüche 1 bis 5, **dadurch gekennzeichnet, dass** Hexamethyldisiloxan und/oder Trimethylethoxysilan gegebenenfalls im Gemisch mit 1,3-Divinyltetramethyldisiloxan und/oder Vinyldimethylethoxysilan und Tetraethoxysilan und/oder dessen Teilhydrolysat

in einer 1. Stufe
mit Wasser und 100 bis 500 ppm HCl, bezogen auf das Gesamtgewicht der Reaktionsmasse der 1. Stufe vor der Destillation, vermischt wird, bei der Siedetemperatur der Reaktionsmasse und einem Druck zwischen 900 und 1100 hPa umgesetzt wird und ca. 70 Gewichtsprozent des entstandenen Ethanols, bezogen auf die Gesamtmenge des entstandenen Ethanols, abdestilliert wird,
in einer 2. Stufe
die in der 1. Stufe erhaltene homogene Reaktionsmasse in Anwesenheit von Base, ausgewählt aus der Gruppe bestehend aus Natriumhydroxid, Kaliumhydroxid und Methylamin, und Toluol, 1-Dodecen oder Xylol als wasserunlösliches organisches Lösungsmittel bei der Siedetemperatur der Reaktionsmasse und einem Druck zwischen 900 und 1100 hPa umgesetzt wird, wobei Wasser sowie Ethanol vollständig bzw. nahezu vollständig und gegebenenfalls ein Teil des wasserunlöslichen organischen Lösungsmittels abdestilliert werden,
in einer 3. Stufe
die in der 2. Stufe erhaltene Reaktionsmasse mit HCl neutralisiert wird, Wasser und gegebenenfalls Ethanol vollständig bzw. nahezu vollständig und gegebenenfalls ein Teil des wasserunlöslichen organischen Lösungsmittels abdestilliert werden und
in einer 4. Stufe
die in der 3. Stufe erhaltene Reaktionsmasse mit Vinylgruppen aufweisenden Organopolysiloxanen mit einer Viskosität von 5 bis 50 000 mPa·s versetzt und anschließend das bei der Neutralisation entstandene, ausgefallene Salz abfiltriert wird sowie gegebenenfalls
in einer 5. Stufe
die in der 4. Stufe erhaltene Reaktionsmasse in Stickstoffatmosphäre destilliert bzw. sprühgetrocknet wird.

## Claims

**1.** Process for the preparation of organopolysiloxane resin, **characterized in that**

in a 1st stage
at least one silane of the formula

$$R_3SiOR^1 \qquad (I)$$

and/or its hydrolysate $R_3SiOSiR_3$, where

R can be identical or different and are a monovalent organic radical, and
$R^1$ is an alkyl radical,

and at least one silane of the formula

$$Si(OR^2)_4 \qquad (II)$$

and/or its partial hydrolysate, where

$R^2$ can be identical or different and are an alkyl radical,

and optionally organosilicon compound selected from the group comprising silanes of the formula

$$R^3{}_aSi(OR^4)_{4-a} \quad (III)$$

and/or their partial hydrolysates, where

a is 1 or 2,
$R^3$ can be identical or different and are a monovalent organic radical, and
$R^4$ can be identical or different and are an alkyl radical, and

organopolysiloxanes of the formula

$$(R^5{}_2SiO)_b \quad (IV),$$

where

$R^5$ can be identical or different and are a monovalent organic radical, and
b is an integer with a value of 3 to 8, preferably of 4 or 5,

and mixtures thereof,
are reacted with water in the presence of acid, at least part of the alcchol formed being distilled off,

in a 2nd stage
the homogeneous reaction mixture obtained in the 1st stage is reacted in the presence of base and in the presence of water-insoluble organic solvent in at least a sufficient amount to obtain a homogeneous reaction mixture, and water and alcohol and optionally part of the water-insoluble organic solvent are removed by distillation,

in a 3rd stage
the reaction mixture obtained in the 2nd stage is neutralized with acid, and any water still present, alcohol and part of the water-insoluble organic solvent are distilled off,

in a 4th stage
the reaction mixture obtained in the 3rd stage is treated with organopolysiloxanes and optionally other components, and the precipitated salt formed in the neutralization is then removed, and optionally

in a 5th stage
the homogeneous reaction mixture obtained in the 4th stage is separated from water-insoluble organic solvent.

**2.** Process according to Claim 1, **characterized in that** the organopolysiloxanes used in the 4th stage consist of units of the formula

$$R^6{}_c(OH)_dH_eSiO_{(4-c-d-e)/2} \quad (V),$$

where

$R^6$ can be identical or different and are a monovalent organic radical,
c is 0, 1, 2 or 3,
d is 0, 1 or 2, preferably 0, and
e is 0, 1 or 2, preferably 0,

with the proviso that the sum (c + d + e) is ≤ 3.

**3.** Process according to Claim 1 or 2, **characterized in that** the organopolysiloxanes consisting of units of formula (V) are linear or branched organopolysiloxanes.

**4.** Process according to any of Claims 1 to 3, **characterized in that** the organopolysiloxanes consisting of units of formula (V), used in the 4th stage, have a viscosity of 0.65 to 100,000 mPa·s at 25°C.

**5.** Process according to any of Claims 1 to 4, **characterized in that**

in a 1st stage
hexamethyldisiloxane and/or trimethylethoxysilane optionally mixed with 1,3-divinyltetramethyldisiloxane and/or vinyldimethylethoxysilane and tetraethoxysilane, and/or its partial hydrolyzate, are mixed with water and 0.2 to 50 mmol of acid, based on 1000 g of reaction mixture in the 1st stage prior to distillation, and reacted at the boiling point of the reaction mixture and at a pressure of between 900 and 1100 hPa, and ethanol formed is distilled off,

in a 2nd stage
the homogeneous reaction mixture obtained in the 1st stage is reacted in the presence of a base selected from the group comprising sodium hydroxide, potassium hydroxide and methylamine, and in the presence of a water-insoluble organic solvent, especially toluene, 1-dodecene or xylene, at the boiling point of the reaction mixture and at a pressure of between

900 and 1100 hPa, all or almost all of the water and ethanol and optionally part of the water-insoluble organic solvent being distilled off,

in a 3rd stage
the reaction mixture obtained in the 2nd stage is neutralized with acid and optionally all or almost all of the water and ethanol and optionally part of the water-insoluble organic solvent are distilled off,

in a 4th stage
the reaction mixture obtained in the 3rd stage is treated with organopolysiloxanes and optionally other components, after which the precipitated salt formed in the neutralization is filtered off, and optionally

in a 5th stage
the reaction mixture obtained in the 4th stage is distilled or spray-dried in a nitrogen atmosphere.

**6.** Process according to any of Claims 1 to 5, **characterized in that**

in a 1st stage
hexamethyldisiloxane and/or trimethylethoxysilane optionally mixed with 1,3-divinyltetramethyldisiloxane and/or vinyldimethylethoxysilane and tetraethoxysilane, and/or its partial hydrolysate, are mixed with water and 100 to 500 ppm of HCl, based on the total weight of the reaction mixture in the 1st stage prior to distillation, and reacted at the boiling point of the reaction mixture and at a pressure of between 900 and 1100 hPa, and approx. 70 percent by weight of the ethanol formed, based on the total amount of ethanol formed, is distilled off,
in a 2nd stage
the homogeneous reaction mixture obtained in the 1st stage is reacted in the presence of a base selected from the group comprising sodium hydroxide, potassium hydroxide and methylamine, and in the presence of toluene, 1-dodecene or xylene as the water-insoluble organic solvent, at the boiling point of the reaction mixture and at a pressure of between 900 and 1100 hPa, all or almost all of the water and ethanol and optionally part of the water-insoluble organic solvent being distilled off,
in a 3rd stage
the reaction mixture obtained in the 2nd stage is neutralized with HCl, all or almost all of the water and optionally ethanol and optionally part of the water-insoluble organic solvent being distilled off,
in a 4th stage
the reaction mixture obtained in the 3rd stage is treated with organopolysiloxanes containing vinyl groups and having a viscosity of 5 to 50,000 mPa·s, after which the precipitated salt formed in the neutralization is filtered off, and optionally
in a 5th stage
the reaction mixture obtained in the 4th stage is distilled or spray-dried in a nitrogen atmosphere.

## Revendications

**1.** Procédé pour la préparation de résine organopolysiloxane, **caractérisé en ce que**

dans une 1re étape
on fait réagir au moins un silane de formule

$$R_3SiOR^1 \qquad (I)$$

et/ou un produit d'hydrolyse $R_3SiOSiR_3$ de celui-ci, où

les radicaux R peuvent être identiques ou différents et représentent un radical organique monovalent et
$R^1$ représente un radical alkyle,

et au moins un silane de formule

$$Si(OR^2)_4 \qquad (II)$$

et/ou un produit d'hydrolyse partielle de celui-ci, où
les radicaux $R^2$ peuvent être identiques ou différents et représentent un radical alkyle,
ainsi qu'éventuellement un composé organosilicié choisi dans le groupe constitué par des silanes de formule

$$R^3{}_aSi(OR^4)_{4-a} \qquad (III)$$

et/ou leurs produits d'hydrolyse partielle, où a est 1 ou 2,
les radicaux $R^3$ peuvent être identiques ou différents et représentent un radical organique monovalent et
les radicaux $R^4$ peuvent être identiques ou différents et représentent un radical alkyle, et
des organopolysiloxanes de formule

$$(R^5{}_2SiO)_b \quad (IV),$$

où
les radicaux $R^5$ peuvent être identiques ou différents et représentent un radical organique monovalent et
b est un nombre entier ayant une valeur de 3 à 8, de préférence 4 ou 5,
ainsi que des mélanges de ceux-ci,
avec de l'eau en présence d'acide, l'alcool formé étant au moins en partie éliminé par distillation,

dans une 2e étape
on fait réagir la masse réactionnelle homogène, obtenue dans la 1re étape, en présence d'une base ainsi que d'au moins une quantité suffisante de solvant organique insoluble dans l'eau pour l'obtention d'une masse réactionnelle homogène et on élimine par distillation l'eau ainsi que l'alcool et éventuellement une partie du solvant organique insoluble dans l'eau,

dans une 3e étape
on neutralise par un acide la masse réactionnelle obtenue dans la 2e étape, on élimine par distillation l'eau éventuellement encore présente, l'alcool et une partie du solvant organique insoluble dans l'eau,

dans une 4e étape
on ajoute à la masse réactionnelle obtenue dans la 3e étape des organopolysiloxanes ainsi qu'éventuellement d'autres composants et on élimine ensuite le sel précipité, provenant de la neutralisation, ainsi que

éventuellement dans une 5e étape
on sépare la masse réactionnelle homogène obtenue dans la 4e étape du solvant organique insoluble dans l'eau.

**2.** Procédé selon la revendication 1, **caractérisé en ce que** les organopolysiloxanes utilisés dans la 4e étape sont ceux à base de motifs de formule

$$R^6_c(OH)_dH_eSiO_{(4-c-d-e)/2} \quad (V)$$

dans laquelle
les radicaux $R^6$ peuvent être identiques ou différents et représentent un radical organique monovalent,

c est 0, 1, 2 ou 3,
d est 0, 1 ou 2, de préférence 0 et
e est 0, 1 ou 2, de préférence 0,

étant entendu que la somme (c+d+e) est ≤ 3.

**3.** Procédé selon la revendication 1 ou 2, **caractérisé en ce que** les organopolysiloxanes à base de motifs de formule (V) consistent en des organopolysiloxanes linéaires ou ramifiés.

**4.** Procédé selon une ou plusieurs des revendications 1 à 3, **caractérisé en ce que** les organopolysiloxanes à base de motifs de formule (V), utilisés dans la 4e étape, ont une viscosité de 0,65 à 100 000 mPa·s, à 25°C.

**5.** Procédé selon une ou plusieurs des revendications 1 à 4, **caractérisé en ce qu'**on mélange de l'hexaméthyldisiloxane et/ou du triméthyléthoxysilane, éventuellement en mélange avec du 1,3-divinyltétraméthyldisiloxane et/ou du vinyldiméthyléthoxysilane et du tétraéthoxysilane et/ou un produit d'hydrolyse partielle de celui-ci

dans une 1re étape
avec de l'eau et 0,2 à 50 mmoles d'acide, par rapport à 1000 g de la masse réactionnelle de la 1re étape avant la distillation, on fait réagir à la température d'ébullition de la masse réactionnelle et sous une pression comprise entre 900 et 1100 hPa et on élimine par distillation l'éthanol formé,
dans une 2e étape
on fait réagir la masse réactionnelle homogène obtenue dans la 1re étape, en présence d'une base choisie dans le groupe constitué par l'hydroxyde de sodium, l'hydroxyde de potassium et la méthylamine, et d'un solvant organique insoluble dans l'eau, en particulier le toluène, le 1-dodécène ou le xylène, à la température d'ébullition de la masse réactionnelle et sous une pression comprise entre 900 et 1100 hPa, l'eau ainsi que l'éthanol étant totalement ou presque totalement éliminés par distillation et éventuellement une partie du solvant organique insoluble dans l'eau étant éliminée par distillation,
dans une 3e étape
on neutralise par un acide la masse réactionnelle obtenue dans la 2e étape, on élimine totalement ou presque totalement par distillation éventuellement l'eau et l'éthanol et éventuellement on élimine par distillation une partie du solvant organique insoluble dans l'eau, et
dans une 4e étape
on ajoute à la masse réactionnelle obtenue dans la 3e étape des organopolysiloxanes ainsi qu'éventuellement d'autres composants et on élimine ensuite par filtration le sel précipité, formé lors de la neutralisation, ainsi qu'éventuellement

dans une 5$^{e}$ étape

on distille sous une atmosphère d'azote ou sèche par atomisation la masse réactionnelle obtenue dans la 4$^{e}$ étape.

**6.** Procédé selon une ou plusieurs des revendications 1 à 5, **caractérisé en ce qu'**on mélange de l'hexaméthyldisiloxane et/ou du triméthyléthoxysilane, éventuellement en mélange avec du 1,3-divinyltétraméthyldisiloxane et/ou du vinyldiméthyléthoxysilane et du tétraéthoxysilane et/ou un produit d'hydrolyse partielle de celui-ci

dans une 1$^{re}$ étape

avec de l'eau et 100 à 500 ppm de HCl, par rapport à la quantité totale de la masse réactionnelle de la 1$^{re}$ étape avant la distillation, on fait réagir à la température d'ébullition de la masse réactionnelle et sous une pression comprise entre 900 et 1100 hPa et on élimine par distillation environ 70 % en poids de l'éthanol formé, par rapport à la quantité totale de l'éthanol formé,

dans une 2$^{e}$ étape

on fait réagir la masse réactionnelle homogène obtenue dans la 1$^{re}$ étape, en présence d'une base choisie dans le groupe constitué par l'hydroxyde de sodium, l'hydroxyde de potassium et la méthylamine, et de toluène, de 1-dodécène ou de xylène, en tant que solvant organique insoluble dans l'eau, à la température d'ébullition de la masse réactionnelle et sous une pression comprise entre 900 et 1100 hPa, l'eau ainsi que l'éthanol étant totalement ou presque totalement éliminés par distillation et éventuellement une partie du solvant organique insoluble dans l'eau étant éliminée par distillation,

dans une 3$^{e}$ étape

on neutralise par HCl la masse réactionnelle obtenue dans la 2$^{e}$ étape, on élimine totalement ou presque totalement par distillation l'eau et éventuellement l'éthanol et éventuellement on élimine par distillation une partie du solvant organique insoluble dans l'eau, et

dans une 4$^{e}$ étape

on ajoute à la masse réactionnelle obtenue dans la 3$^{e}$ étape des organopolysiloxanes comportant des groupes vinyle, ayant une viscosité de 5 à 50 000 mPa·s et on élimine ensuite par filtration le sel précipité, formé lors de la neutralisation, ainsi qu'éventuellement

dans une 5$^{e}$ étape

on distille sous une atmosphère d'azote ou sèche par atomisation la masse réactionnelle obtenue dans la 4$^{e}$ étape.